# EUROPEAN PATENT SPECIFICATION

(11) **EP 3 085 230 B1**
(45) Date of publication and mention of the grant of the patent: **21.03.2018**
(21) Application number: 16164987.6
(22) Date of filing: 13.04.2016
(51) Int. Cl.: A01M 17/00

(54) **APPARATUS AND METHOD FOR THE REMOVAL OF MICE AND RATS FROM FOODSTUFFS**
VORRICHTUNG UND VERFAHREN ZUR ENTFERNUNG VON MÄUSEN UND RATTEN AUS NAHRUNGSMITTELN
APPAREIL ET PROCEDE D'ELIMINATION DES SOURIS ET RATS DES DENRÉES ALIMENTAIRES

(30) Priority: 13.04.2015 NL 2014626
(43) Date of publication of application: 26.10.2016
(73) Proprietor: Oxy-Low Systems Europe B.V., 3281 NC Numansdorp (NL)
(72) Inventor: Bergwerff, Frederik, 3286 BG Klaaswaal (NL); Van Rennes, Louis Jean, 3286 BA Klaaswaal (NL); McCarthy, Robert George, 67156 Pandaan, Pasuruan, Jawa Timur (ID)
(74) Representative: Verhees, Godefridus Josephus Maria

(56) References cited:
- WO-A1-98/48620
- WO-A1-2014/203972
- WO-A2-01/67857
- FR-A- 596 977
- FR-A1- 2 487 638
- US-A1- 2014 112 827

## Description

### Field of the invention

The invention relates to a device for removing vermin, more specifically mice and rats, from a container filled with a product, more particularly foodstuffs, comprising:
- a chamber provided with a closable input opening through which one or more containers can be brought into the chamber and a first gas supply opening through which gas can be introduced into the chamber,
- first gas supply means connected to the first gas supply opening,
- first control means for controlling the gas supply means, and
- a control unit to which the control means are connected.

An object of the supply of gas is to reduce the oxygen content in the chamber such that the vermin, when breathing, receive an insufficient amount of oxygen and die. The first gas supply means connected to the gas supply opening may be a storage vessel containing gas under pressure and a adjustable shut-off valve connected to the vessel.

If this takes place prior to the supply of the gas, the gas supply opening could be used for this purpose to which opening suction means are then connected. If the removal of air takes place during the introduction of the gas, this could be effected through a further opening in the wall of the chamber, where the air can then freely escape from the chamber or can be sucked away by suction means.

### State of the art

A device of this type is known for removing insects from foodstuffs. However, it turns out that also mice and rats may be found in foodstuffs. Mice and rats are also killed in the known device, but a disadvantage of this is that the dead animals stay behind in the foodstuffs. Such a device is for example known from WO 01/67857 A2.

### Summary of the invention

It is an object of the invention to provide a device of the type defined in the opening paragraph where vermin can be removed from a container in a simple manner. To this end the device according to the invention is characterized in that underneath the bottom of the chamber is located a receptacle and the bottom of the chamber has a hatch leading to this receptacle, and in that the device further includes operating means for opening and closing the hatch, which operating means are also connected to the control unit. By introducing gas into the chamber when the hatch is open, any mice and rats that may be present in the container will flee from the gas and creep into the receptacle where there is still a relatively high oxygen content. By subsequently closing the hatch the mice and rats are caught and the receptacle can be removed from the device. Preferably, such an amount of gas is introduced that the mice and rats that have flown to the receptacle are killed by the gas. Furthermore, during the introduction of the gas it is possible for light to be burnt in the receptacle so as to lure the animals into the receptacle even more.

An embodiment of the device according to the invention is characterized in that the chamber is further provided with a closable output opening through which the container or containers can be removed from the chamber and in that the device further includes:
- a tunnel having an input that is connected to the output opening, as well as an output and a second gas supply opening, as well as
- second gas supply means connected to the second gas supply opening,
- second control means for controlling the second gas supply means, and
- transport means for transporting through the tunnel the containers coming from the chamber.

By allowing the containers to pass through a tunnel during transport and also reducing the oxygen content in this tunnel by the introduction of the gas, any surviving vermin are killed as yet.

A further embodiment of the device according to the invention is characterized in that the device further includes:
- a further chamber that has a further closable input opening through which one or more containers can be moved into the chamber and which is connected to the output of the tunnel, a further closable output opening through which the container or containers can be taken out of the chamber, and a third gas supply opening, as well as
- third gas supply means connected to the third gas supply opening, and
- third control means for controlling the third gas supply means.

This second chamber may function as a gas lock so that only a small amount of gas escapes from the tunnel when the containers are taken out of the tunnel.

The invention also relates to a method for removing vermin, more specifically mice and rats, from a container filled with a product, more particularly foodstuffs, comprising:
- inserting the container into a chamber,
- shutting off the chamber from the environment,
- introducing gas into the chamber, and
- taking the container out of the chamber.

With respect to the method the invention is characterized in that, prior to gas being introduced into the chamber, a hatch is opened leading to a receptacle present underneath the chamber and in that after the introduction of the gas the hatch is closed and the receptacle is emptied.

For embodiments of the method according to the invention reference be made to the appended claims.

### Brief description of the drawings

The invention will now be described in more detail based on an example of embodiment of the device according to the invention in which:
Fig. 1 gives a diagrammatic representation of an embodiment of the device according to the invention in a longitudinal sectional view; and
Fig. 2 gives a diagrammatic representation of the device represented in Fig. 1 in a top view.

### Detailed description of the drawings

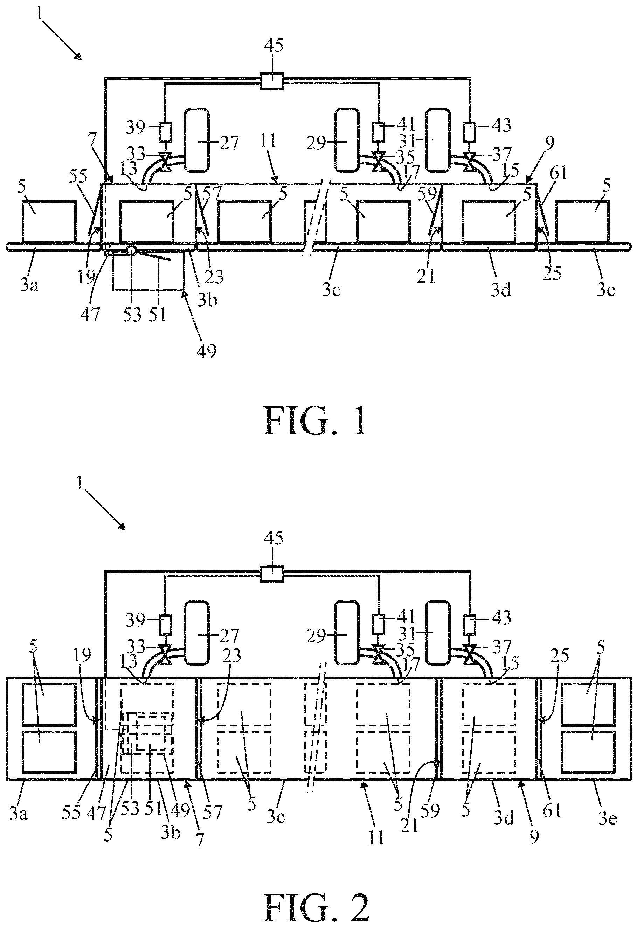

Figs. 1 and 2 give a diagrammatic representation of an embodiment of the device according to the invention in a longitudinal sectional view and top view respectively. The device 1 is equipped with conveyor belts 3a-e for moving containers 5 filled with foodstuffs or other products through the device and has two chambers 7 and 9 with a tunnel 11 extending in between. These chambers and tunnel are each provided with a gas supply opening 13, 15 and 17 through which a non-oxygen containing gas, for example nitrogen or carbon dioxide can be introduced into the chamber so as to reduce the oxygen content in these spaces.

The chambers are each provided with a closable input opening 9 and 21 through which one or more containers can be inserted simultaneously into a chamber, and with a closable output opening 23 and 25 through which the container or containers can simultaneously be taken out of the chamber. Via the output opening 23 the containers end up in the tunnel 11 and via the input opening 21 the containers leave the tunnel.

Gas supply means are connected to the gas supply openings 13, 15 and 17. These gas supply means are formed by gas bottles 27, 29 and 31 (in lieu of three individual gas bottles the three gas supply openings may also be connected to an aggregate gas bottle) which are connected via adjustable valves 33, 35 and 37 to the spaces in the chambers 7 and 9 and the tunnel 11. The valves are connected to control means 39, 41 and 43 which may cause the valves to open and close. The control means are connected to a central control unit 45.

Underneath the bottom 47 of the chamber 7 is located a receptacle 49 and the bottom of the chamber has a hatch 51 leading to this receptacle. The hatch may be formed by a lid of the receptacle. For opening and closing the hatch the device is further provided with operating means 53. These operating means are also connected to the central control unit 45.

The operation of the device is as follows. Containers 5 which are to be freed from any vermin present therein are placed on the conveyor belt 3a. The transport means take the containers through the input opening 19 into the chamber 7 while the output opening 23 remains closed. Then the space in the chamber is closed off from the environment in that the input opening 19 is closed by door 55. The driving means for the conveyor belts and the operating means for opening and closing the doors are also connected to the central control unit. For clarity, however, these are not indicated in the drawing figures. Subsequently, the hatch 51 in the bottom of the chamber is opened and the control means 39 are activated by the central control unit 45 and gas is introduced into the chamber through the valve 33. Preferably, a light is turned on in the receptacle 49 located underneath the chamber so as to lure the vermin fleeing from the gas into the receptacle. Once the oxygen content has reduced, there is a waiting pause after which the hatch 51 is closed and the door 57 that has closed off the output opening 23 is opened after which the containers are taken to the tunnel by the conveyor belt 3b. The receptacle can be emptied and the following containers placed on the conveyor belt 3a can be taken to the chamber.

During the transport through the tunnel 11 also in the tunnel the oxygen content is similarly reduced by introducing gas so as to kill any surviving vermin. Once the end of the tunnel has been reached, the containers leave the tunnel through door 59 and reach the chamber 9 through the input opening 21 in which chamber again the oxygen content is reduced so as to further reduce the chance of any still surviving vermin remaining behind in the containers. By finally opening the door 61 the containers leave the chamber through output opening 25 and are further moved on by conveyor belt 3e. During the whole process the containers are intermittently moved on by the device.

Albeit in the foregoing disclosure the invention has been explained with reference to the drawing figures, it should be pointed out that the invention is by no means restricted to the embodiment shown in the drawing figures. The invention also pertains to all embodiments deviating from the embodiment shown in the drawing figures within the scope defined by the claims.

## Claims

1. Device (1) for removing vermin, more specifically mice and rats, from a container (5) filled with a product, more particularly foodstuffs, comprising:
- a chamber (7) provided with a closable input opening (19) through which one or more containers can be brought into the chamber and a first gas supply opening (13) through which gas can be introduced into the chamber,
- first gas supply means (27, 33) connected to the first gas supply opening, and
- first control means (39) for controlling the gas supply means, and
- a control unit (45) to which the control means are connected,
**characterized in that** underneath the bottom (47) of the chamber (7) is located a receptacle (49) and the bottom of the chamber has a hatch (51) leading to this receptacle, and **in that** the device further includes operating means (53) for opening and closing the hatch, which operating means are also connected to the control unit (45).

2. Device (1) as claimed in claim 1, **characterized in that** the chamber (7) is further provided with a closable output opening (23) through which the container or containers (5) can be taken out of the chamber and **in that** the device further includes:
- a tunnel (11) having an input which is connected to the output opening (23), as well as an output and a second gas supply opening (17), as well as
- second gas supply means (29, 35) connected to the second gas supply opening,
- second control means (41) for controlling the second gas supply means, and
- transport means (3c) for transporting through the tunnel the containers coming from the chamber.

3. Device (1) as claimed in claim 2, **characterized in that** the device further includes :
- a further chamber (9) which has a further closable input opening (21) through which one or more containers (5) can be moved into the chamber and which is connected to the output of the tunnel (11), a further closable output opening (25) through which the container or containers can be taken out of the chamber, and a third gas supply opening (15), as well as
- third gas supply means (31, 37) connected to the third gas supply opening, and
- third control means (43) for controlling the third gas supply means.

4. Method for removing vermin, more specifically mice and rats, from a container (5) filled with a product, more particularly foodstuffs, comprising:
- inserting the container into a chamber (7),
- shutting off the chamber from the environment,
- introducing gas into the chamber, and
- taking the container out of the chamber,
**characterized in that**, prior to gas being introduced into the chamber (7), a hatch (51) is opened leading to a receptacle (49) present underneath the chamber and, **in that** after the introduction of the gas the hatch is closed and the receptacle is emptied.

5. Method as claimed in claim 4, **characterized in that** when the container (5) is taken out of the chamber (7) the container is placed in a tunnel (11) after which the tunnel is closed and the container is transported through the tunnel while gas is introduced into the tunnel during this transport, after which the container is taken out of the tunnel.

6. Method as claimed in claim 5, **characterized in that** when the container (5) is taken out of the tunnel (11) this container is placed in a further chamber (9) after which the chamber is closed off from the environment and gas is introduced into the further chamber, after which the container is taken out of the further chamber.

## Patentansprüche

1. Einrichtung (1) zum Beseitigen von Ungeziefer, insbesondere Mäuse und Ratten, aus einem mit einem Produkt, speziell Lebensmittel, gefüllten Behälter (5), umfassend:
- eine Kammer (7) mit einer verschließbaren Zuführungsöffnung (19), über die ein oder mehrere Behälter in die Kammer eingeführt werden können und eine erste Gaszuführungsöffhung (13), über die Gas in die Kammer eingeführt werden kann,
- an die erste Gaszuführungsöffnung angeschlossene erste Gaszuführungsmittel (27, 33), und
- erste Regelmittel (39) zum Regeln der Gaszuführungsmittel, und
- eine Regeleinrichtung (45), an die die Regelmittel angeschlossen sind,
**dadurch gekennzeichnet, dass** sich unter dem Boden (47) der Kammer (7) ein Auffangbehälter (49) und im Boden der Kammer eine Luke (51) zum Auffangbehälter befindet, und dass die Einrichtung ferner Bedienungsmittel (53) zum Öffnen und Schließen der Luke enthält, welche Bedienungsmittel ebenfalls an die Regeleinrichtung (45) angeschlossen sind.

2. Einrichtung (1) nach Anspruch 1, **dadurch gekennzeichnet, dass** die Kammer (7) ferner eine verschließbare Ausgangsöffnung (23) hat, über die der oder die Behälter (5) aus der Kammer entnommen werden können und dass die Einrichtung ferner:
- einen Tunnel (11) enthält mit einem Eingang, der an die Ausgangsöffnung (23) angeschlossen ist, sowie einen Ausgang und eine zweite Gaszuführungsöffnung (17), sowie
- an die zweite Gaszuführungsöffnung angeschlossene zweite Gaszuführungsmittel (29, 35),
- zweite Regelmittel (41) zum Regeln der zweiten Gaszuführungsmittel, und
- Transportmittel (3c) zum im Tunnel Verschieben der aus der Kammer kommenden Behälter.

3. Einrichtung (1) nach Anspruch 2, **dadurch gekennzeichnet, dass** die Einrichtung ferner:
- eine weitere Kammer (9) enthält mit einer weiteren verschließbaren Zuführungsöffnung (21), über die ein oder mehrere Behälter (5) in die Kammer eingeführt werden können und die an den Ausgang des Tunnels (11) angeschlossen ist, eine weitere verschließbare Ausgangsöffnung (25), über die der oder die Behälter aus der Kammer entnommen werden können, und eine dritte Gaszuführungsöffnung (15), sowie
- an die dritte Gaszuführungsöffnung angeschlossene Gaszuführungsmittel (31, 37), und
- dritte Regelmittel (43) zum Regeln der dritten Gaszuführungsmittel.

4. Arbeitsweise zum Beseitigen von Ungeziefer, insbesondere Mäuse und Ratten, aus einem mit einem Produkt, speziell Lebensmittel, gefüllten Behälter (5), umfassend:
- Einführen des Behälters in eine Kammer (7),
- Abdichten der Kammer von der Umgebung,
- Gas zuführen in die Kammer, und
- Behälter aus der Kammer entnehmen,
**dadurch gekennzeichnet, dass** vor dem Zuführen des Gases in die Kammer (7) eine Luke (51) zu einem unter der Kammer befindlichen Auffangbehälter (49) geöffnet wird, und nach dem Einführen des Gases die Luke geschlossen und der Auffangbehälter geleert wird.

5. Arbeitsweise nach Anspruch 4, **dadurch gekennzeichnet, dass** bei der Entnahme des Behälters (5) aus der Kammer (7) dieser in einen Tunnel (11) kommt, wonach der Tunnel geschlossen wird und der Behälter durch den Tunnel transportiert wird, wobei während des Transports Gas in den Tunnel eingeführt wird und danach der Behälter aus dem Tunnel entnommen wird.

6. Arbeitsweise nach Anspruch 5, **dadurch gekennzeichnet, dass** bei der Entnahme des Behälters (5) aus dem Tunnel (11) dieser in eine weitere Kammer (9) kommt, dann die Kammer von der Umgebung abgedichtet wird und Gas in die weitere Kammer eingeführt wird, wonach der Behälter aus dieser weiteren Kammer entnommen wird.

## Revendications

1. Dispositif (1) pour éliminer de la vermine, en particulier des souris et des rats, se trouvant dans un container (5) rempli d'un produit, en particulier des denrées alimentaires, comprenant :
- une chambre (7) pourvue d'une ouverture d'entrée (19) verrouillable par laquelle un ou plusieurs containers peuvent être apportés dans la chambre, et d'une première ouverture d'approvisionnement de gaz (13) par laquelle du gaz peut être introduit dans la chambre,
- des premiers moyens d'approvisionnement de gaz (27,33) connectés à la première ouverture d'approvisionnement de gaz et
- des premiers moyens de pilotage (39) pour piloter les moyens d'approvisionnement de gaz, et
- une unité de contrôle (45) sur laquelle sont connectés les moyens de pilotage,
**caractérisé en ce que** sous le fond (47) de la chambre (7) se trouve un bac de récupération (49) et dans le fond de la chambre se trouve un abattant (51) vers ce bac de récupération, et **en ce que** le dispositif comprend en outre des moyens de commande (53) pour ouvrir et fermer l'abattant, lesquels moyens de commande sont également connectés à l'unité de contrôle (45).

2. Dispositif (1) selon la revendication 1, **caractérisé en ce que** la chambre (7) est pourvue en outre d'une ouverture de sortie (23) verrouillable par laquelle le container ou les containers (5) peuvent être enlevés de la chambre et **en ce que** le dispositif en outre :
- comprend un tunnel (11) pourvu d'une entrée connectée à l'ouverture de sortie (23), ainsi que d'une sortie et d'une deuxième ouverture d'approvisionnement de gaz (17), ainsi que
- des deuxièmes moyens d'approvisionnement de gaz (29,35) connectés à la deuxième ouverture d'approvisionnement de gaz,
- des deuxièmes moyens de pilotage (41) pour piloter les deuxièmes moyens d'approvisionnement de gaz, et
- des moyens de transport (3c) pour déplacer d'un bout à l'autre du tunnel les containers venant de la chambre.

3. Dispositif (1) selon la revendication 2, **caractérisé en ce que** le dispositif en outre :
- comprend une chambre supplémentaire (9) qui est pourvue d'une ouverture d'entrée verrouillable supplémentaire (21) par laquelle un ou plusieurs containers (5) peuvent être apportés dans la chambre et qui est connectée à la sortie du tunnel (11), d'une ouverture de sortie verrouillable supplémentaire (25) par laquelle le container ou les containers peuvent être enlevés de la chambre, et d'une troisième ouverture d'approvisionnement de gaz (15), ainsi que
- des troisièmes moyens d'approvisionnement de gaz (31,37) connectés à la troisième ouverture d'approvisionnement de gaz, et
- des troisièmes moyens de pilotage (43) pour piloter les troisièmes moyens d'approvisionnement de gaz.

4. Méthode pour éliminer de la vermine, en particulier des souris et des rats, se trouvant dans un container (5) rempli d'un produit, en particulier de denrées alimentaires, comprenant :
- l'apport du container dans une chambre (7),
- la fermeture de la chambre pour l'isoler de l'entourage,
- l'introduction de gaz dans la chambre, et
- le retrait du container se trouvant dans la chambre,
**caractérisée en ce que**, avant que du gaz ne soit introduit dans la chambre (7), un abattant (51) s'ouvre vers un bac de récupération (49) se trouvant sous la chambre, et **en ce qu'**après l'introduction de gaz, l'abattant se ferme et le bac de récupération est vidé.

5. Méthode selon la revendication 4, **caractérisée en ce que** lors du retrait du container (5) se trouvant dans la chambre (7), le container est placé dans un tunnel (11), après quoi le tunnel est fermé et le container est transporté d'un bout à l'autre du tunnel, et du gaz est introduit dans le tunnel pendant le transport, et ensuite le container est enlevé du tunnel.

6. Méthode selon la revendication 5, **caractérisée en ce que** lors du retrait du container (5) se trouvant dans le tunnel (11), le container est placé dans une chambre supplémentaire (9), puis la chambre est fermée pour être isolée de l'entourage, et du gaz est introduit dans la chambre supplémentaire, après quoi le container est enlevé de la chambre supplémentaire.
